# EUROPÄISCHE PATENTANMELDUNG

(11) **EP 3 702 097 A1**
(43) Veröffentlichungstag der Anmeldung: **02.09.2020**
(21) Anmeldenummer: 20158895.1
(22) Anmeldetag: 21.02.2020
(51) Int. Cl.: B23Q 3/06, B23Q 11/00

(54) **VERFAHREN ZUM BEARBEITEN ODER PRÜFEN EINER SCHAUFEL**

(30) Priorität: 27.02.2019 DE 102019202673
(71) Anmelder: MTU Aero Engines AG, 80995 München (DE)
(72) Erfinder: Schwarz, Stefan, 80995 München (DE)

(57) **Zusammenfassung**

Die vorliegende Erfindung betrifft ein Verfahren zum Bearbeiten oder Prüfen einer Schaufel (20) für eine Strömungsmaschine (1), wobei die Schaufel (20) für das Bearbeiten oder Prüfen gehaltert wird, wozu die Schaufel (20) in einer Klemmvorrichtung (40) derart eingeklemmt wird, dass sich zwischen der Schaufel (20) und der Klemmvorrichtung (40) als Klemmpartner (20,40) ein Punkt- oder Linienkontakt (41) ausbildet, wobei einer der Klemmpartner (20,40) eine geringere Festigkeit als der andere Klemmpartner (20,40) hat und im Bereich des Punkt- oder Linienkontakts (41) plastifiziert.

## Beschreibung

### Technisches Gebiet

Die vorliegende Erfindung betrifft ein Verfahren zum Bearbeiten oder Prüfen einer Schaufel für eine Strömungsmaschine.

### Stand der Technik

Eine Strömungsmaschine gliedert sich funktional in Verdichter, Brennkammer und Turbine, wobei im Falle eines Flugtriebwerks angesaugte Luft im Verdichter komprimiert und in der nachgelagerten Brennkammer mit hinzugemischtem Kerosin verbrannt wird. Das entstehende Heißgas, eine Mischung aus Verbrennungsgas und Luft, durchströmt die nachgelagerte Turbine und wird dabei expandiert. Die Turbine und der Verdichter sind in der Regel jeweils mehrstufig aufgebaut, wobei eine jeweilige Stufe einen Leit- und einen Laufschaufelkranz umfasst. Jeder Schaufelkranz ist aus einer Mehrzahl umlaufend aufeinanderfolgender Schaufeln aufgebaut, die je nach Anwendung von dem Verdichter- bzw. dem Heißgas umströmt werden.

In der Herstellung können diese Schaufeln verschiedentlich bearbeitet werden, es kann bspw. mit einer geometrisch bestimmten oder unbestimmten Schneide spanend Material abgetragen werden. Da die Schaufeln im Betrieb hohen Belastungen ausgesetzt sind, kann andererseits auch eine eingehende Prüfung der Schaufeln von Interesse sein. Eine besondere Bedeutung kann hierbei eine Schwingungsbelastung haben, mittels welcher sich bspw. Lebensdauerversuche durchführen bzw. Simulationen abgleichen lassen. Sowohl bei der Bearbeitung als auch bei der Prüfung kann eine Herausforderung darin bestehen, die Schaufel zuverlässig in der Bearbeitungs- bzw. Prüfvorrichtung zu haltern.

### Darstellung der Erfindung

Der vorliegenden Erfindung liegt das technische Problem zugrunde, ein vorteilhaftes Verfahren zum Bearbeiten oder Prüfen einer Schaufel anzugeben.

Dies wird erfindungsgemäß mit dem Verfahren gemäß Anspruch 1 gelöst. Die vorteilhafte Neuerung besteht dabei in der Halterung der Schaufel mit einer Klemmvorrichtung, die derart ausgestaltet ist, dass sich zwischen der Schaufel und der Klemmvorrichtung ein Punkt- oder Linienkontakt ausbildet. Dabei ist einer der beiden Klemmpartner, also die Schaufel oder die Klemmvorrichtung, zumindest lokal mit einer geringeren Festigkeit als der andere Klemmpartner vorgesehen und plastifiziert im Bereich des Punkt- oder Linienkontakts. Vereinfacht zusammengefasst wird die Klemmvorrichtung lokal sehr begrenzt, dabei bzw. deshalb aber mit hohem Anpressdruck an die Schaufel angepresst.

Ein alternativer Ansatz würde bspw. dahin gehen, die Schaufel bzw. einen Schaufelfuß mit einer komplementär geformten Klemmvorrichtung großflächig einzuspannen, bspw. einen tannenbaumförmigen Schaufelfuß zwischen Metallblöcken mit komplementären Nuten. Dies ergibt vergleichsweise große Kontaktzonen und abhängig von der Toleranzlage auch inhomogene Flächenpressungen, insbesondere auch lokal niedrige Flächenpressungen. Im Ergebnis kann es zu schädlichen Haft-Gleit-Übergängen kommen, woraus bspw. eine Schädigung der Schaufel und/oder der Klemmvorrichtung resultieren kann.

Dem lässt sich mit dem erfindungsgemäßen Punkt- bzw. Flächenkontakt zwischen Schaufel und Klemmvorrichtung vorbeugen. Die im Vergleich besser definierten Kontaktzonen lassen sich bspw. auch besser in Simulationen abbilden, was speziell bei der Materialprüfung von Interesse sein kann. Mit Blick auf die Schwingungsuntersuchungen kann sich infolge des Punkt- bzw. Linienkontakts z. B. über einen weiten Anregungsbereich ein lineares Verhalten ergeben (etwa bezüglich Eigenfrequenz, Amplitude und Dämpfung), was die Versuchsdurchführung und -auswertung vereinfachen kann.

Bevorzugte Ausgestaltungen der Erfindung finden sich in den abhängigen Ansprüchen und der gesamten Offenbarung, wobei bei der Darstellung der Merkmale nicht immer im Einzelnen zwischen Verfahrens- oder Verwendungsaspekten unterschieden wird; jedenfalls implizit ist die Offenbarung hinsichtlich sämtlicher Anspruchskategorien zu lesen.

Die Bezeichnung "Punkt- oder Linienkontakt" ist vorliegend als technischer Begriff zu verstehen (nicht als infinitesimal kleiner Punkt bzw. dünne Linie im mathematischen Sinn). Im technischen Sinn handelt es sich um einen Hertzschen Kontakt, also die kleinstmögliche punkt- bzw. linienförmige Kontaktfläche, die sich ergibt, wenn Klemmvorrichtung und Schaufel unter Hertzscher Pressung aneinandergedrückt werden. Zur Illustration, ein entsprechender Punktdurchmesser oder eine Linienbreite kann bspw. bei mindestens 1/100 mm bzw. 1/10 mm liegen, wobei eine mögliche Obergrenze bspw. bei höchstens 1 mm liegen kann.

Der "Linienkontakt" kann sich in mehrere, nicht zusammenhängende Linienkontaktbereiche untergliedern. Diese können bspw. derart auf einander entgegengesetzten Seiten der Schaufel angeordnet sein, dass die Schaufel dazwischen zuverlässig gehaltert ist, siehe unten im Detail. Gleiches gilt für den "Punktkontakt", der sich entsprechend in mehrere separate Punktkontaktbereiche untergliedern kann, zwischen denen die Schaufel dann von verschiedenen Seiten eingefasst ist. Die Klemmbacken der Klemmvorrichtung können konventionell hergestellt werden, also bspw. funkenerosiv aus einem Metallblock herausgeschnitten werden. Ganz allgemein kann die Schaufel, insbesondere eine Turbinenschaufel, bspw. auch aus einer Nickelbasislegierungen vorgesehen sein; auch die Klemmvorrichtung (die Klemmbacken) können aus einer Nickelbasislegierung vorgesehen sein, die dann aber bspw. eine geringere Festigkeit haben kann (schmiedbar ist).

Generell weist die Schaufel ein Schaufelblatt und ein Sockel- bzw. Fußstück auf. Dabei kann es sich sowohl um einen Schaufelfuß mit einem Zahn bzw. einer Zahnstruktur (insbesondere Tannenbaumgeometrie) zum Einsetzen in eine Scheibe handeln, ebenso kann aber auch aus einer integral mit Schaufelblättern geformten Scheibe (Blisk) ein Scheibenstück samt Schaufelblatt zu Testzwecken herausgeschnitten und eingespannt werden, siehe unten im Detail. Prinzipiell kann es sich bei der Schaufel auch um eine Leitschaufel handeln, kann als Sockel also bspw. ein Innen- oder Außendeckbandabschnitt dienen. Speziell mit Blick auf die Prüfung und Schwingungsbelastung kann sich die Anwendung jedoch insbesondere auf eine Laufschaufel richten.

Gemäß einer bevorzugten Ausführungsform ist die Klemmvorrichtung der Klemmpartner mit der geringeren Festigkeit, plastifiziert also die Klemmvorrichtung im Bereich des Punkt- oder Linienkontakts. Generell bezieht sich der Festigkeitsvergleich der Klemmpartner auf den Kontaktbereich, werden also die Materialeigenschaften von Schaufel und Klemmvorrichtung dort betrachtet, wo diese aneinander gepresst werden. Im Falle der Klemmvorrichtung wird also bspw. die Festigkeit der Klemmbacken zugrundegelegt, zwischen denen die Schaufel eingespannt wird. Im Falle der Schaufel werden bspw. die Festigkeit des Schaufelblattes oder des Schaufelfußes zugrundegelegt.

In bevorzugter Ausgestaltung bildet sich zwischen der Schaufel und der Klemmvorrichtung ein Linienkontakt aus. Bevorzugt wird die Schaufel dabei derart eingeklemmt, dass über den gesamten Linienkontakt eine homogene Flächenpressung vorliegt. Der Klemmpartner mit der geringeren Festigkeit, also bspw. die Klemmvorrichtung (deren Klemmbacken), plastifiziert somit entlang des gesamten Linienkontakts, womit die Flächenpressung homogenisiert wird. Bildlich gesprochen werden etwaige Unregelmäßigkeiten des Anpressdrucks entlang der Linie, die bspw. aus geringen Unebenheiten oder Fehlpassungen resultieren könnten, durch die plastische Verformung "aufgezehrt"; es verbleibt der elastische Anteil, der entlang der Linie konstant ist. Damit lassen sich selbst kleinste Toleranzen oder Fehlpassungen ausgleichen, die Schaufel wird optimal eingeklemmt. Bei der Bearbeitung oder insbesondere Prüfung der Schaufel tritt dann kein Setzen mehr auf, die Schaufel ist zuverlässig gehaltert.

Gemäß einer bevorzugten Ausführungsform wird die Klemmvorrichtung im Bereich des Punkt- oder Linienkontakts ausschließlich mit einer Normalkraft an die Schaufel gepresst. Dies wird im Kontaktbereich jeweils lokal betrachtet, in den einzelnen Linienkontakt- bzw. Punktkontaktbereichen steht die Anpresskraft also jeweils senkrecht auf dem jeweiligen Oberflächenbereich. Durch die Vermeidung von Tangentialanteilen lässt sich die Gefahr eines Überschreitens der Haftgrenze vorbeugen.

In bevorzugter Ausgestaltung ist die Schaufel in der Klemmvorrichtung kinematisch definiert gehaltert, und zwar auch unter Vernachlässigung etwaiger Tangentialkräfte. Letzteres meint, dass selbst wenn es Tangentialkräfte gäbe (was nicht bevorzugt ist), diese außer Betracht bleiben. Betrachtet man allein die Normalkräfte zwischen Schaufel und Klemmvorrichtung, so ist die Schaufel "kinematisch definiert", wenn sie sich erstens nicht bewegen kann und die Halterung dabei zweitens aber auch nicht überdefiniert ist. Letzteres meint, dass es nicht mehr Kontaktbereiche als notwendig gibt, um die Schaufel unbeweglich zu halten.

Eine bevorzugte Ausführungsform betrifft eine Schaufel mit einem Schaufelblatt und einem Schaufelfuß, der einen Zahn bzw. eine Zahnstruktur aufweist. Axial gesehen kann der bzw. können die Zähne in Umlaufrichtung hervortreten, ein solcher Schaufelfuß lässt sich axial in eine komplementär geformte Schaufelfußaufnahme in der Scheibe einschieben. Der Schaufelfuß kann bspw. mit zwei Zähnen eine Schwalbenschwanzform haben, bei mehreren radial versetzten Zähnen spricht man von einer Tannenbaumgeometrie. Generell beziehen sich im Rahmen dieser Offenbarung die Angaben "axial", "radial" bzw. "umlaufend", sowie die zugehörigen Richtungen, auf die Drehachse, um welche die Schaufeln im Betrieb rotieren (und die typischerweise mit der Längsachse der Strömungsmaschine zusammenfällt).

In bevorzugter Ausgestaltung wird die Schaufel am Schaufelfuß eingeklemmt. Bevorzugt ist dabei ein Bereich des Punkt- oder Linienkontakts an einer nach radial innen weisenden Flanke des Zahns angeordnet, und ein anderer Bereich an einer nach radial außen weisenden Flanke des Zahns. Je Flanke steht die Anpresskraft dabei bevorzugt senkrecht auf dem jeweiligen Bereich, siehe vorne.

Vorzugsweise weist der Schaufelfuß umlaufend entgegengesetzt einen weiteren Zahn auf, der mit dem Zahn ein Schwalbenschwanzprofil bilden oder Teil einer Tannenbaumstruktur sein kann. In bevorzugter Ausgestaltung wird der Schaufelfuß dann auch an dem weiteren Zahn eingeklemmt, und zwar wiederum sowohl an einer nach radial innen als auch an einer nach radial außen weisenden Flanke. An jeder der Flanken steht die Anpresskraft bevorzugt senkrecht auf dem jeweiligen Kontaktbereich, siehe vorne.

Wie bereits erwähnt, kann die Schaufel alternativ auch aus einer Blisk (Blade Integrated Disk) herausgetrennt sein, sie wird dann bevorzugt an dem herausgetrennten Scheibenstück gehaltert. Hierbei kann einerseits die Klemmvorrichtung die geringere Festigkeit haben (siehe vorne), andererseits kann aber auch die Schaufel der Klemmpartner mit der geringeren Festigkeit sein. Im Falle des herausgetrennten Scheibenstücks kann insbesondere auch die Ausbildung eines Punktkontakts bzw. von Punktkontaktbereichen bevorzugt sein.

Prinzipiell kann in einer vorliegend beschriebenen Weise auch eine Verdichterschaufel bearbeitet oder geprüft werden, bevorzugt findet das Verfahren bei einer Turbinenschaufel Anwendung.

In bevorzugter Ausgestaltung wird die in der Klemmvorrichtung gehalterte Schaufel geprüft, nämlich einer Schwingungsbelastung ausgesetzt. In diesem Zusammenhang kann sich ein Vorteil des Punkt- oder Linienkontakts bspw. dahingehend ergeben, dass die Dämpfung des Aufbaus deutlich niedriger ist (keine Haft-Gleit-Übergänge). Folglich können mit konventionellen Schwingungserregern höhere Belastungen eingebracht werden (was ein bis dato nicht zugängliches Testregime eröffnet) bzw. kann derselbe Schwingungseintrag mit weniger Erregungsleistung erreicht werden. Ein Vorteil kann sich bspw. auch dahingehend ergeben, dass aufgrund der Vermeidung der Haft-Gleit-Übergänge einem unbeabsichtigten Wärmeeintrag vorgebeugt werden kann. Ein solcher könnte anderenfalls in den Kontaktzonen zu ausgeprägtem Fretting führen, wodurch die Schaufel und/oder die Klemmvorrichtung beschädigt werden kann.

Die Erfindung betrifft auch die Verwendung einer Schaufel und/oder einer Klemmvorrichtung in einem vorliegend offenbarten Verfahren, also insbesondere zum Haltern der Schaufel über einem Punkt- oder Linienkontakt.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: ein Mantelstromtriebwerk in einem Axialschnitt;
- Figur 2: eine Schaufel mit Schaufelblatt und Schaufelfuß;
- Figur 3: eine nicht erfindungsgemäße Halterung der Schaufel gemäß Figur 2 in einer Klemmvorrichtung mit Flächenkontakten;
- Figur 4: eine erfindungsgemäße Halterung der Schaufel gemäß Figur 2 in einer Klemmvorrichtung mit Punkt- oder Linienkontakt.

### Bevorzugte Ausführung der Erfindung

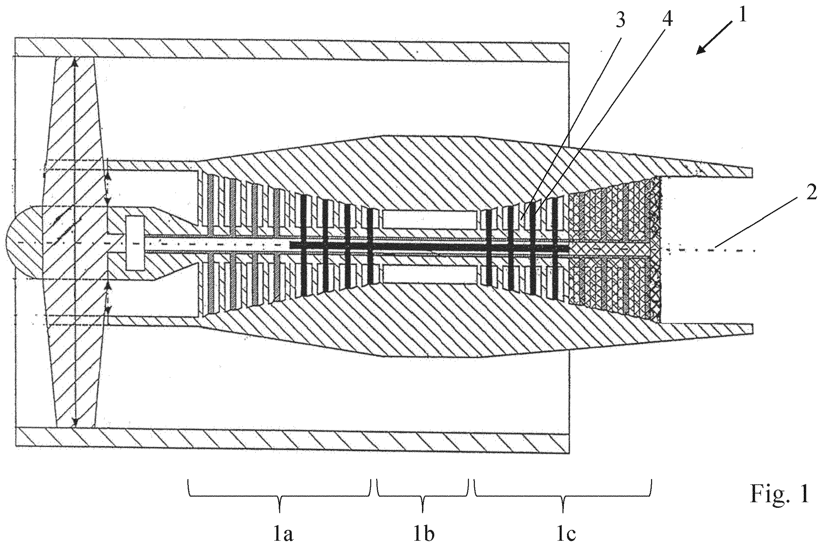

**Figur 1** zeigt eine Strömungsmaschine 1, konkret ein Mantelstromtriebwerk, in einem Axialschnitt. Die Strömungsmaschine 1 gliedert sich funktional in Verdichter la, Brennkammer 1b und Turbine 1c. Sowohl der Verdichter la als auch die Turbine 1c sind jeweils aus mehreren Stufen aufgebaut. Jede der Stufen setzt sich aus einem Leit- und einem Laufschaufelkranz zusammen. Der Übersichtlichkeit halber ist für die Turbine 1c nur für eine der Stufen der Leitschaufelkranz 3 und der zugehörige Laufschaufelkranz 4 mit Bezugszeichen referenziert. Im Verdichter la wird die angesaugte Luft komprimiert, sie wird dann in der nachgelagerten Brennkammer 1b mit hinzugemischten Kerosin verbrannt. Das Heißgas durchströmt den Heißgaskanal und treibt dabei die Laufschaufelkränze an, die um die Drehachse 2 rotieren.

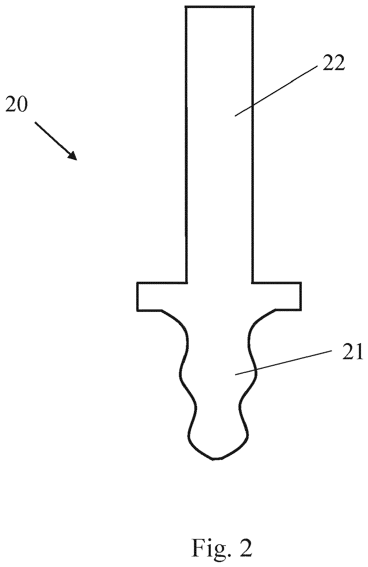

**Figur 2** zeigt eine Laufschaufel 20, die als Teil des Laufschaufelkranzes 4 in eine Laufscheibe (nicht dargestellt) eingesetzt wird. In der Laufscheibe sind umlaufend verteilt eine Mehrzahl Schaufelfußaufnahmen vorgesehen, im fertig montierten Zustand ist in jede davon eine Schaufel 20 eingesetzt. Dazu weist die Schaufel 20 einen Schaufelfuß 21 auf, Figur 2 lässt dessen Profil in einer Axialansicht erkennen. Der Schaufelfuß 21 lässt sich axial in die jeweilige Schaufelfußaufnahmen einschieben, die Schaufel 20 samt Schaufelblatt 22 ist dann formschlüssig an der Drehscheibe gehalten.

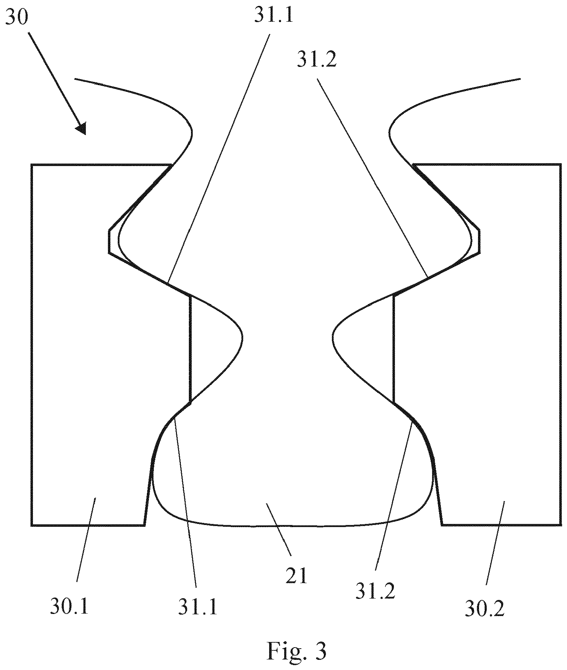

Zur Überprüfung bzw. Zertifizierung der Schaufeln 20 werden diese unterschiedlichen Schwingungsbelastungen ausgesetzt. **Figur 3** illustriert für solche Prüfzwecke eine nicht erfindungsgemäße Klemmvorrichtung 30 mit 2 Klemmbacken 30.1, 30.2, die jeweils in mehreren Kontaktflächen 31.1, 31.2 an dem Schaufelfuß 21 anliegen. Aufgrund der großflächigen Anlage kann der Anpressdruck lokal verringert sein, sodass es zu Haft-Gleit-Übergängen kommt, vergleiche die Anmerkungen in der Beschreibungseinleitung im Detail.

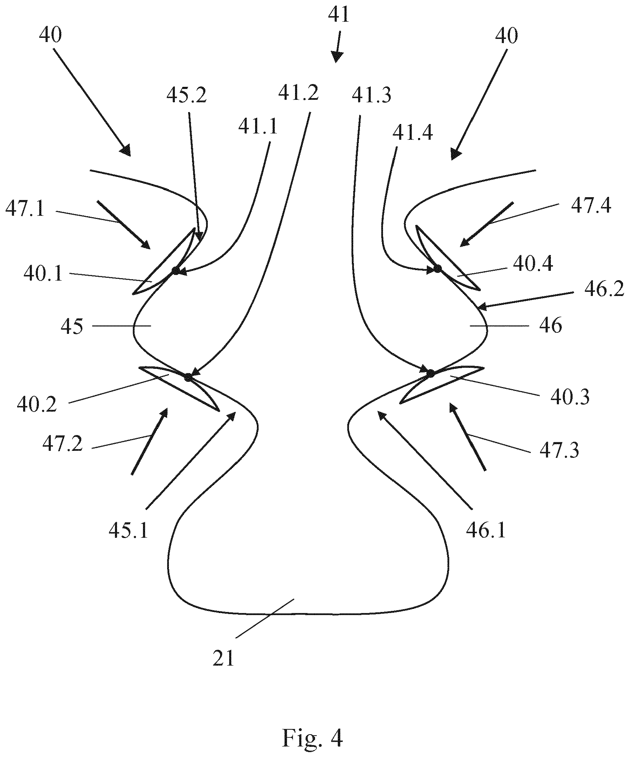

**Figur 4** zeigt ein erfindungsgemäßes Haltern des Schaufelfußes 21 mit einer Klemmvorrichtung 40 über einen Punkt- oder Linienkontakt 41 mit mehreren Bereichen 41.1-41.4 (vorliegend einen Linienkontakt, gezeigt in einem zur axialen Richtung senkrechten Schnitt). Im Einzelnen ist der Schaufelfuß 21 an einem Zahn 45 und einem umlaufend entgegengesetzten, weiteren Zahn 46 gehaltert, und zwar jeweils an einer nach radial innen weisenden Flanke 45.1, 46.1 und einer nach radial außen weisenden Flanke 45.2, 46.2.

Die Klemmvorrichtung 40, konkret die Klemmbacken 40.1-40.4, haben jeweils eine konvexe Kontur, sie werden jeweils ausschließlich mit einer Normalkraft 47.1-47.4 angepresst. Die Klemmbacken 40.1-40.4 sind zwar wie der Schaufelfuß 21 aus einer Nickelbasislegierung vorgesehen, allerdings mit einer geringeren Festigkeit. Die Normalkraft 47.1-47.4 wird dabei so hoch eingestellt, dass die Klemmbacken 40.1-40.4 jeweils im Bereich des Punkt- oder Linienkontakts 41 plastifizieren. Bezüglich der Vorteile wird ausdrücklich auf die Beschreibungseinleitung verwiesen.

**BEZUGSZEICHENLISTE**

| | |
|---|---|
| Strömungsmaschine | 1 |
| Verdichter | 1a |
| Brennkammer | 1b |
| Turbine | 1c |
| Drehachse | 2 |
| Leitschaufelkranz | 3 |
| Laufschaufelkranz | 4 |
| Laufschaufel | 20 |
| Schaufelfuß | 21 |
| Schaufelblatt | 22 |
| Klemmvorrichtung | 30 |
| Klemmbacke | 30.1 |
| Klemmbacke | 30.2 |
| Kontaktfläche | 31.1 |
| Kontaktfläche | 31.2 |
| Klemmvorrichtung | 40 |
| Klemmbacken | 40.1-40.4 |
| Punkt- oder Linienkontakt | 41 |
| Bereiche davon | 41.1-41.4 |
| Zahn | 45 |
| Flanken davon | 45.1, 45.2 |
| weiterer Zahn | 46 |
| Flanken davon | 46.1, 46.2 |
| Normalkräfte | 47.1-47.4 |

## Patentansprüche

1. Verfahren zum Bearbeiten oder Prüfen einer Schaufel (20) für eine Strömungsmaschine (1),
wobei die Schaufel (20) für das Bearbeiten oder Prüfen gehaltert wird,
wozu die Schaufel (20) in einer Klemmvorrichtung (40) derart eingeklemmt wird, dass sich zwischen der Schaufel (20) und der Klemmvorrichtung (40) als Klemmpartner (20,40) ein Punkt- oder Linienkontakt (41) ausbildet,
wobei einer der Klemmpartner (20,40) eine geringere Festigkeit als der andere Klemmpartner (20,40) hat und im Bereich des Punkt- oder Linienkontakts (41) plastifiziert.

2. Verfahren nach Anspruch 1, bei welchem die Klemmvorrichtung (40) der Klemmpartner (20,40) mit der geringeren Festigkeit ist.

3. Verfahren nach Anspruch 1 oder 2, bei welchem die Klemmvorrichtung (40) derart vorgesehen ist, dass sich zwischen der Schaufel (20) und der Klemmvorrichtung (40) ein Linienkontakt ausbildet.

4. Verfahren nach Anspruch 3, bei welchem die Schaufel (20) in der Klemmvorrichtung (40) derart eingeklemmt wird, dass der Klemmpartner (20,40) mit der geringeren Festigkeit so plastifiziert, dass über den gesamten Linienkontakt eine homogene Flächenpressung vorliegt.

5. Verfahren nach einem der vorstehenden Ansprüche, bei welchem die Klemmvorrichtung (40) in einem Bereich (41.1-41.4) des Punkt- oder Linienkontakts (41) ausschließlich mit einer Normalkraft (47.1-47.4) an die Schaufel (20) gepresst wird.

6. Verfahren nach einem der vorstehenden Ansprüche, bei welchem die Schaufel (20) in der Klemmvorrichtung (40) derart eingeklemmt wird, dass die Schaufel (20) in der Klemmvorrichtung (40) auch unter Vernachlässigung etwaiger Tangentialkräfte kinematisch definiert gehaltert ist.

7. Verfahren nach einem der vorstehenden Ansprüche, bei welchem die Schaufel (20) ein Schaufelblatt (22) und einen Schaufelfuß (21) aufweist, der mit einem Zahn (45) zum Einsetzen in eine komplementäre Aufnahme in einer Scheibe vorgesehen ist, wobei zum Haltern der Schaufelfuß (21) der Schaufel (20) eingeklemmt wird.

8. Verfahren nach Anspruch 7, bei welchem der Schaufelfuß (21) solchermaßen in der Klemmvorrichtung (40) eingeklemmt wird, dass sich sowohl an einer nach radial innen weisenden Flanke (45.1) des Zahns (45) ein Bereich (41.2) des Punkt- oder Linienkontakts (41) ausbildet als auch an einer nach radial außen weisenden Flanke (45.2) des Zahns (45) ein Bereich (41.1) des Punkt- oder Linienkontakts (41) ausbildet.

9. Verfahren nach Anspruch 7 oder 8, bei welchem der Schaufelfuß (21) dem Zahn (45) umlaufend entgegengesetzt einen weiteren Zahn (46) aufweist, wobei der Schaufelfuß (21) solchermaßen in der Klemmvorrichtung (40) eingeklemmt wird, dass sich sowohl an einer nach radial innen weisenden Flanke (46.1) des weiteren Zahns (46) ein Bereich (41.3) des Punkt- oder Linienkontakts (41.3) ausbildet als auch an einer nach radial außen weisenden Flanke (46.2) des weiteren Zahns (46) ein Bereich (41.4) des Punkt- oder Linienkontakts (41) ausbildet.

10. Verfahren nach einem der Ansprüche 1 bis 6, bei welchem die Schaufel (20) vor dem Haltern in der Klemmvorrichtung (40) aus einer Scheibe mit mehreren integral daran vorgesehenen Schaufelblättern herausgetrennt wird, die Schaufel (20) beim Haltern also ein Scheibenstück mit einem Schaufelblatt daran ist.

11. Verfahren nach Anspruch 10, bei welchem zum Haltern der Schaufel (20) das Scheibenstück eingeklemmt wird.

12. Verfahren nach Anspruch 10 oder 11, ausgenommen Kombinationen mit den Ansprüchen 3 und 4, bei welchem die Klemmvorrichtung (40) derart vorgesehen ist, dass sich zwischen der Schaufel (20) und der Klemmvorrichtung (40) ein Punktkontakt ausbildet.

13. Verfahren nach einem der vorstehenden Ansprüche, bei welchem die Schaufel (20) eine Turbinenschaufel ist.

14. Verfahren nach einem der vorstehenden Ansprüche, bei welchem die in der Klemmvorrichtung (40) gehalterte Schaufel (20) geprüft wird, nämlich über die Klemmvorrichtung (40) einer Schwingungsbelastung ausgesetzt wird.

15. Verwendung einer Schaufel (20) und/oder einer Klemmvorrichtung (40) in einem Verfahren nach einem der vorstehenden Ansprüche.
